Europäisches Patentamt

European Patent Office

Office européen des brevets

(19)

(11) Veröffentlichungsnummer: **0 447 907 A1**

# EUROPÄISCHE PATENTANMELDUNG

(21) Anmeldenummer: 91103652.3

(22) Anmeldetag: 09.03.91

(51) Int. Cl.⁵: **G01J 3/42**

(30) Priorität: 23.03.90 DE 4009334

(43) Veröffentlichungstag der Anmeldung:
25.09.91 Patentblatt 91/39

(84) Benannte Vertragsstaaten:
**DE GB IT**

(71) Anmelder: **BODENSEEWERK PERKIN-ELMER GMBH**
**Askaniaweg 4**
**W-7770 Überlingen/Bodensee(DE)**

(72) Erfinder: **Wulf, Jürgen, Dr.**
**Langgasse 22**
**W-7770 Überlingen(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**W-5620 Velbert 11 Langenberg(DE)**

(54) Beleuchtungsanordnung zur Beaufschlagung eines Photomultipliers bei einem Zweistrahlphotometer.

(57) Ein Photomultiplier (10) mit einer länglich-rechteckigen, zu der Eintrittsöffnung (14) verkanteten Kathode (20) wird abwechselnd von einem Messlichtbündel (36) und einem Referenzlichtbündel (40) beaufschlagt. Das Messlichtbündel (36) und das Referenzlichtbündel (40) verlaufen dabei in einer zu den Längskanten der Kathode (20) parallelen Ebene und fallen so auf die Kathode (20), dass sie gleiche Flächen der Kathode (20) beaufschlagen.

Fig.3

Die Patentanmeldung betrifft eine Beleuchtungsanordnung zur Beaufschlagung eines Photomultipliers mit einem Mess- und einem Referenzlichtbündel bei einem Zweistrahlphotometer, bei welcher

(a) der Photomultiplier ein Gehäuse mit einer rechteckigen Eintrittsöffnung, ein zu der Eintrittsöffnung im wesentlichen senkrechtes Gitter, das eine Gitternormale definiert, und eine länglich-rechteckige Kathode aufweist, welche um eine zu den Längsseiten der Kathode parallele Achse gegenüber einer zur Gitternormalen senkrechten Ebene geneigt angeordnet ist,

(b) die Mess- und Referenzlichtbündel einen länglich-rechteckigen Bündelquerschnitt aufweisen, wobei die Längsseite des Bündelquerschnitts im wesentlichen parallel zu der Längsseite der Kathode verläuft und

(c) die Mess- und Referenzlichtbündel aus unterschiedlichen Richtungen auf die Kathode fallen.

Bei einem Zweistrahlphotometer wird auf einen photoelektrischen Detektor abwechselnd ein Messlichtbündel und ein Referenzlichtbündel geleitet. Das Messlichtbündel durchläuft dabei einen Mess-Strahlengang, in welchem eine Probe angeordnet ist, und das Referenzlichtbündel durchläuft einen Referenzstrahlengang, der keine Probe enthält. Mess- und Referenzlichtbündel haben dabei im allgemeinen länglich-rechteckige Bündelquerschnitte. Als Detektor wird häufig ein Photomultiplier verwendet. Ein solcher Photomultiplier hat typischerweise ein Gehäuse mit einer rechteckigen, lichtdurchlässigen Eintrittsöffnung. Hinter der Eintrittsöffnung und im wesentlichen parallel dazu ist ein Gitter angeordnet. Das Gitter definiert eine Gitternormale. Hinter dem Gitter sitzt eine länglich-rechteckige Kathode. Diese Kathode ist in einer Ebene angeordnet, die gegenüber einer zur Gitternormalen senkrechten Ebene um eine zu den Längsseiten der Kathode parallele Achse verdreht ist.

Bei einem bekannten Zweistrahl-Spektralphotometer nach der DE-A-3 211 724 ist der photoelektrische Detektor in Form eines Photomultipliers in der Nähe des Schnittpunktes von Mess- und Referenzstrahlengang angeordnet. Eine gleichmässige Belichtung des Photomultipliers wird durch dachförmige Streuplatten oder eine Ulbricht'sche Kugel erreicht. Im übrigen verläuft der Strahlengang in einer Ebene, nämlich der Papierebene der Figur 1 in der DE-A-3 211 72.

Die DE-A-3 211 725 betrifft ebenfalls eine Detektoranordnung bei einem Zweistrahl-Spektralphotometer. Zur gleichförmigen Ausleuchtung der photoempfindlichen Oberfläche des Photomultipliers sind zwei Streuplatten in dachförmiger Anordnung und ein innen verspiegelter Zylinder vorgeschaltet. Auch hier verläuft der Strahlengang in einer Ebene.

Um das Licht von Mess- und Referenzbündel optimal ausnutzen zu können, sollten die Längsseiten der länglich-rechteckigen Bündelquerschnitte parallel zu den Längsseiten der Kathode sein. Dann fällt das gesamte Mess- bzw. Referenzlichtbündel auf die Kathode. Das Messlichtbündel fällt aus einer anderen Richtung auf den Photomultiplier als das Referenzlichtbündel. Bei bekannten Anordnungen dieser Art verlaufen Mess- und Referenzlichtbündel mit ihren Bündelachsen in einer horizontalen Referenzebene, die senkrecht zu den Längsseiten der Kathode etwa durch die Mitte der Kathode verläuft. Die Bündelachsen schliessen dabei mit der Gitternormalen entgegengesetzt gleiche Winkel ein. Durch die Neigung der Kathode beaufschlagen Mess- und Referenzlichtbündel dabei unterschiedliche Flächen der Kathode. Das führt zu Unterschieden in der Empfindlichkeit des Photomultipliers für Mess- und Referenzlichtbündel. Die Empfindlichkeit der Kathode des Photomultipliers ist im allgemeinen ortsabhängig. Ausserdem ist der Verlauf der Empfindlichkeit in Abhängigkeit vom Einfallswinkel in der Referenzebene stärker gekrümmt als senkrecht dazu.

Der Erfindung liegt die Aufgabe zugrunde, eine Beleuchtungsanordnung der eingangs definierten Art so auszubilden, dass sich für Mess- und Referenzlichtbündel gleiche Empfindlichkeiten ergeben.

Erfindungsgemäss wird diese Aufgabe dadurch gelöst, dass das Messlichtbündel auf einer Seite einer zu den Längsseiten der Kathode senkrechten und etwa durch die Mitte der Kathode verlaufenden Referenzebene verläuft und mit der Referenzebene einen Winkel bildet und das Referenzlichtbündel auf der anderen Seite der Referenzebene verläuft und mit der Referenzebene einem dem Winkel des Messlichtbündels entgegengesetzt gleichen Winkel bildet, so dass Mess- und Referenzlichtbündel gleiche Flächen der Kathode beaufschlagen.

Die Aufspaltung der Bündel erfolgt so in einer zur Referenzebene senkrechten, "vertikalen" Ebene.

Bei einer solchen Anordnung treffen Mess- und Referenzbündel auf die gleiche Fläche der Kathode. Die Kathode erfasst dabei die vollen Bündelquerschnitte. Wenn Mess- und Referenzlichtbündel in üblicher Weise in einer senkrecht zu den Längsseiten der Bündelquerschnitte verlaufenden, "horizontalen" Ebene aufgespalten würden und lediglich der Photomultiplier um 90° gedreht würde, dann würden die Längsseiten der Bündel parallel zu den Schmalseiten der Kathode verlaufen. Die Kathode würde nicht die vollen Bündelquerschnitte erfassen.

Ein Ausführungsbeispiel der Erfindung ist nachstehend unter Bezugnahme auf die zugehörigen Zeichnungen näher erläutert.

Fig. 1     zeigt zum besseren Verständnis der Erfindung eine Beleuchtungsanordnung nach dem Stand der Technik in einem Horizontalschnitt.

Fig. 2    zeigt einen Horizontalschnitt einer Beleuchtungsanordnung nach der Erfindung.

Fig. 3    zeigt einen zugehörigen Vertikalschnitt.

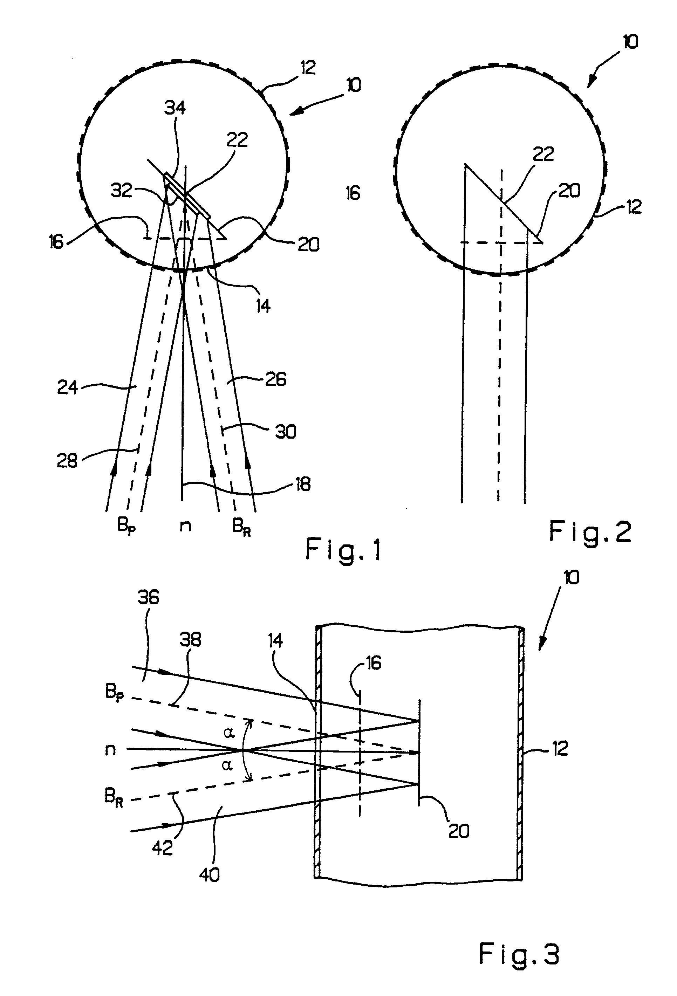

In Fig. 1 ist mit 10 ein Photomultiplier bezeichnet. Der Photopultiplier 10 hat ein Gehäuse 12 von zylindrischer Grundform. Das Gehäuse 12 hat ein länglich-rechteckiges Fenster 14. In dem Gehäuse 12 sitzt ein Gitter 16. Das Gitter 16 ist im wesentlichen parallel zu dem Fenster 14. Das Gitter 16 definiert eine Gitternormale 18 etwa in der Mitte des Fensters 14. Die Gitternormale 18 liegt in einer Referenzebene, die etwa von der Papierebene in Fig. 1 gebildet ist.

Hinter dem Gitter 16 sitzt eine Kathode 20. Die Kathode 20 ist länglich-rechteckig. Die Längsseiten der Kathode 20 verlaufen senkrecht zur Papierebene in Fig. 1. Die Kathode 20 ist gegenüber einer zum Gitter 16 parallelen Ebene oder einer zur Gitternormalen 18 senkrechten Ebene um eine parallel zu den Längsseiten der Kathode 20 verlaufenden (gedachte) Achse 22 verkantet.

Durch das Fenster 14 fallen abwechselnd ein Mess- und ein Referenzlichtbündel 24 bzw. 26 auf die Kathode 20. Bei der in Fig. 1 dargestellten Beleuchtungsanordnung nach dem Stand der Technik verlaufen die Bündelachsen 28 und 30 von Mess- bzw. Referenzlichtbündel beide in der Referenzebene, d. h. in der Papierebene von Fig. 1. Sie bilden mit der Gitternormalen 18 in dieser Referenzebene entgegengesetzt gleiche Winkel α.

Wie aus Fig. 1 erkennbar ist, werden dabei von den Bündelquerschnitten unterschiedliche Flächen 32 bzw. 34 der Kathode 20 ausgeleuchtet. Dabei fallen Mess- und Referenzlichtbündel noch unter verschiedenen Winkeln ein.

Fig. 2 und 3 zeigen demgegenüber eine Beleuchtungsanordnung nach der Erfindung. Entsprechende Teile sind in Fig. 2 und 3 mit den gleichen Bezugszeichen versehen wie in Fig. 1. An Aufbau und Anordnung des Photomultipliers 10 ist nichts geändert. Das Messlichtbündel 36 mit der Bündelachse 38 ist so geleitet, dass es auf der einen, in Fig. 3 oberen Seite der durch die Gitternormale gehenden "horizontalen" Referenzebene verläuft und mit der Gitternormalen einen Winkel α bildet. Die Bündelachse 38 liegt in einer die Gitternormale enthaltenden und parallel zu den Längsseiten der Kathode 20 sich erstreckenden, "vertikalen" Ebene. Das ist die Papierebene von Fig. 3, die senkrecht zu der "waagerechten" Referenzebene ist. Das Referenzlichtbündel 40 mit der Bündelachse 42 ist so geleitet, dass es auf der entgegengesetzten, in Fig. 3 unteren Seite der Referenzebene verläuft. Die Bündelachse 42 des Referenzlichtbündels 40 bildet mit der Gitternormalen 18 zur anderen Seite hin ebenfalls einen Winkel α. Die Bündelachse 42 liegt auch in der durch die Gitternormale 18 gehenden "vertikalen" Ebene.

Man erkennt aus Fig. 3, dass Mess- und Referenzlichtbündel 36 und 40 die gleiche Fläche der Kathode beaufschlagen. Sie fallen auch unter gleichen Winkeln auf die Kathode. Es hat sich gezeigt, dass auf diese Weise die unterschiedlichen Empfindlichkeiten des Photomultipliers 10 für das Messlichtbündel 36 und das Referenzlichtbündel 4o vermieden werden können.

**Patentansprüche**

1. Beleuchtungsanordnung zur Beaufschlagung eines Photomultipliers mit einem Mess- und einem Referenzlichtbündel bei einem Zweistrahlphotometer, bei welcher
   (a) der Photomultiplier (10) ein Gehäuse (12) mit einer rechteckigen Eintrittsöffnung (14), ein zu der Eintrittsöffnung (14) im wesentlichen senkrechtes Gitter (16), das eine Gitternormale (18) definiert, und eine länglich-rechteckige Kathode (20) aufweist, welche um eine zu den Längsseiten der Kathode (20) parallele Achse (22) gegenüber einer zur Gitternormalen (18) senkrechten Ebene geneigt und angeordnet ist,
   (b) die Mess- und Referenzlichtbündel (36, 40) einen länglich-rechteckigen Bündelquerschnitt aufweisen, wobei die Längsseite des Bündelquerschnitts im wesentlichen parallel zu der Längsseite der Kathode (20) verläuft und
   (c) die Mess- und Referenzlichtbündel (36, 40) aus unterschiedlichen Richtungen auf die Kathode fallen,

   **dadurch gekennzeichnet, dass**
   (d) das Messlichtbündel (36) auf einer Seite einer zu den Längsseiten der Kathode (20) senkrechten und etwa durch die Mitte der Kathode (20) verlaufenden Referenzebene einen Winkel ( α ) bildet und
   (e) das Referenzlichtbündel (40) auf der anderen Seite der Referenzebene verläuft und mit der Referenzebene einem dem Winkel ( α ) des Messlichtbündels entgegengesetzt gleichen Winkel bildet, so dass Mess- und Referenzlichtbündel gleiche Flächen der Kathode (20) beaufschlagen.

Fig.1

Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | <u>US - A - 2 494 440</u><br>(HAYNES)<br>   * Gesamt *<br>     -- | 1 | G 01 J 3/42 |
| A | <u>GB - A - 2 128 359</u><br>(SHIMADZU)<br>   * Seite 2, Zeile 117 - Seite 4, Zeile 46; Fig. 1-5 *<br>     -- | 1 | |
| A | <u>DD - A1 - 251 827</u><br>(VEB CARL ZEISS JENA)<br>   * Gesamt *<br>     -- | 1 | |
| D,A | <u>DE - A1 - 3 211 724</u><br>(SHIMADZU)<br>   * Seite 7, Zeile 25 - Seite 8, Zeile 28; Fig. 2 *<br>     -- | 1 | |
| D,A | <u>DE - A1 - 3 211 725</u><br>(SHIMADZU)<br>   * Seite 9, Zeile 5 - Seite 11, Zeile 10; Fig. 5 *<br>     ---- | 1 | **RECHERCHIERTE SACHGEBIETE (Int Cl⁵)**<br><br>G 01 J 1/00<br>G 01 J 3/00<br>G 01 N 21/00 |

Der vorliegende Recherchenbericht wurde für alle Patentansprüche erstellt.

| Recherchenort | Abschlußdatum der Recherche | Prüfer |
|---|---|---|
| WIEN | 04-06-1991 | BAUER |